# EUROPEAN PATENT APPLICATION

(11) **EP 2 693 122 A1**
(43) Date of publication of application: **05.02.2014**
(21) Application number: 12764873.1
(22) Date of filing: 29.03.2012
(51) Int. Cl.: F23R 3/06, F02C 7/18

(54) **COMBUSTOR FOR GAS TURBINE ENGINE AND GAS TURBINE**

(30) Priority: 31.03.2011 JP 2011078486
(71) Applicant: IHI Corporation, Tokyo 135-8710 (JP)
(72) Inventor: NAKAMATA, Chiyuki, Tokyo 135-8710 (JP); OKITA, Yoji, Tokyo 135-8710 (JP); HOSOI, Jun, Tokyo 135-8710 (JP); HIROMITSU, Nagayoshi, Tokyo 135-8710 (JP); HIRATA, Atsushi, Tokyo 135-8710 (JP); IDETA, Takeomi, Tokyo 135-8710 (JP)
(74) Representative: Lamb, Martin John Carstairs
(86) International application number: PCT/JP2012/058330
(87) International publication number: WO 2012/133630

(57) **Abstract**

A combustor for gas turbine engine, wherein: a plurality of impingement-cooling holes (39) are opened passing through an external wall (35) of a liner for cooling air (CA) to blow out towards the outer surface of an internal wall (37) of the liner; a plurality of pin-fins (43) are formed on the outer surface of the internal wall (37) of the liner; a plurality of effusion cooling holes (41) are opened passing through the internal wall (37) of the liner for cooling air (CA) to blow out along the inner surface of the internal wall (37) of the liner. The top surface of each pin-fin (43) is not in contact with the inner surface of the external wall (35) of the liner and the ratio (H/D) of the height (H) of the pin-fin (43) to the equivalent diameter (D) of the impingement-cooling hole (39) is set to be 1.0 - 3.0.

## Description

### [Technical Field]

The present invention relates to: a combustor for a gas turbine engine which is used in gas turbine engines such as an aircraft gas turbine engine and a power generation gas turbine engine, and which is configured to produce a combustion gas by combusting fuel in compressed air; and a gas turbine.

### [Background Art]

A general annular combustor for a gas turbine engine includes an annular combustor case and an annular combustor liner is concentrically installed inside the combustor case. As a result, an annular combustion chamber for combusting fuel is formed inside the combustor liner. In addition, fuel nozzles configured to inject the fuel into the combustion chamber are installed in a front section of the combustor liner at intervals in the circumferential direction; and swirlers configured to introduce compressed air into the combustion chamber are installed around the peripheral edge of each fuel nozzle in the front section of the combustor liner.

On the other hand, a combustor for a gas turbine engine which enables both effusion cooling and impingement cooling to be applied to the combustor liner has been developed for the purpose of enhancing the cooling performance of the combustor liner (see JP 2010-43643 A). To put it specifically, the combustor liner in the combustor for a gas turbine engine of the prior art has a double-wall structure including an external wall of the liner and an internal wall of the liner, and multiple impingement-cooling holes are opened through the external wall of the liner for part of compressed air as cooling air to blow out towards the outer surface (outer wall surface) of the internal wall of the liner. In addition, multiple effusion cooling holes are opened through the internal wall of the liner for the cooling air to blow out along the inner surface (inner wall surface) of the internal wall of the liner.

### [Citation List]

### [Patent Literature]

[PTL 1] JP 2010-43643 A

### [Summary of Invention]

### [Technical Problem]

Incidentally, there is a growing demand in recent years for higher power of a gas turbine engine. To meet the demand, the turbine inlet temperature, namely, the combustion gas temperature inside a combustion chamber tends to become very high. For this reason, it has become imperative that the cooling performance of the combustor liner exposed to the combustion gas should be enhanced to a higher level.

In view of the above, an object of the present invention is to provide a combustor having a novel configuration for a gas turbine engine and to provide a gas turbine, each of which can enhance the cooling performance of a combustor liner to a higher level.

### [Solution to Problem]

For the purpose of solving the foregoing problem, the inventors of this application carried out a cooling performance test as follows. Test pieces simulating a combustor liner having a double-wall structure in which, multiple impingement-cooling holes were opened passing through an external wall of a liner, multiple effusion cooling holes were opened passing through an internal wall of the liner, and pin-fins (heat transfer enhancement pin-fins) were formed on the outer surface of the internal wall of the liner were provided for cooling performance tests. A large number of test pieces with different pin-fin heights were prepared. Then, the investors performed the cooling performance test on each of the test pieces while making a high-temperature gas flow on one side (the internal wall side of the liner) and making cooling gas flow on the other side (the external wall side of the liner) of the test piece, respectively. As a result of the cooling performance tests on the large number of test pieces (see Example to be described later), the investors have succeeded in obtaining a novel finding that cooling effectiveness of the combustor liner can be sufficiently enhanced while inhibiting an increase in the weight of the combustor liner by setting a ratio of the height of the pin-fins to the equivalent diameter of the impingement-cooling holes to an appropriate ratio with the top surface of each pin-fins being not in contact with the inner surface of the external wall of the liner. Based on the finding, the inventors have completed the present invention. Here, the appropriate ratio is in a range of 1.0 to 3.0. In addition, the inventors consider that the above-mentioned novel finding resulted from a fully heat transfer enhancement by the pin-fins.

A first aspect of the present invention is a combustor for a gas turbine engine used in the gas turbine engine and configured to produce a combustion gas by combusting fuel in compressed air. The combustor comprises: a combustor case; and a combustor liner provided inside the combustor case and including a combustion chamber which is formed inside the combustor liner, the combustion chamber configured to combust the fuel, wherein the combustor liner is formed into a double-wall structure including an external wall of the liner and an internal wall of the liner, a plurality of impingement-cooling holes are opened passing through the external wall of the liner for part of the compressed air as cooling air to blow out towards an outer surface (outer wall surface) of the internal wall of the liner, a plurality of effusion cooling holes are opened passing through the internal wall of the liner for the cooling air to blow out along an inner surface (inner wall surface) of the internal wall of the liner, a plurality of pin-fins (heat transfer enhancement pin-fins) are formed on the outer surface of the internal wall of the liner, an top surface of each pin-fin is not in contact with an inner surface of the external wall of the liner, and a ratio of a height of each heat transfer pin to an equivalent diameter of each impingement-cooling hole is set in a range of 1.0 to 3.0.

A second aspect of the present invention is a gas turbine comprising the combustor of the first aspect.

### [Advantageous Effects of Invention]

The present invention can sufficiently enhance cooling effectiveness of the combustor liner while inhibiting an increase in weight of the combustor liner. The present invention accordingly makes it possible to enhance a cooling performance of the combustor liner to a higher level while promoting reduction in weight of the combustor for a gas turbine engine.

### [Brief Description of Drawings]

[Fig. 1] Fig. 1 is a conceptual diagram of an aircraft gas turbine engine of an embodiment of the present invention.
[Fig. 2] Fig. 2 is a front cross-sectional view of a combustor for a gas turbine engine of the embodiment of the present invention.
[Fig. 3] Fig. 3 is an enlarged cross-sectional view taken along the III-III line of Fig. 2.
[Fig. 4] Fig. 4(a) is a cross-sectional view showing a main part of an external wall of a liner or an internal wall of the liner, and Fig. 4(b) is a diagram showing a part of a combustor liner in a state developed into a plane.
[Fig. 5] Fig. 5(a) is a graph showing a relationship between an effective heat transfer area enhancement ratio and a ratio (H/L) of a height of pin-fin to an equivalent diameter of an impingement-cooling hole, and Fig. 5(b) is a diagram for explaining a cooling performance test.

### [Description of Embodiments]

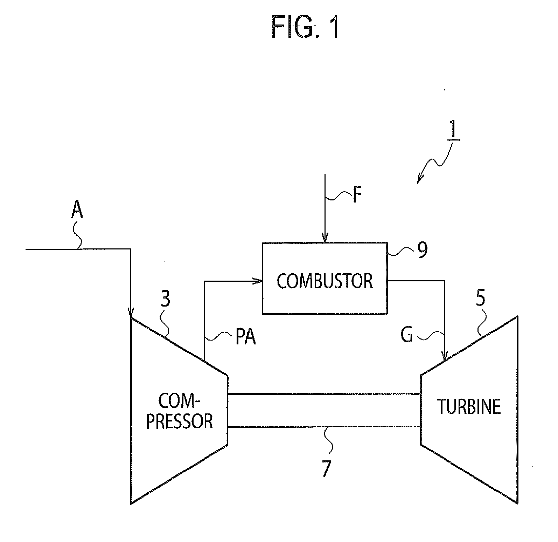

Descriptions will be provided for an embodiment of the present invention by referring to Fig. 1 to Fig. 4. It should be noted that in the drawings, reference sign "FF" indicates forward (upstream of the mainstream), and reference sign "FR" indicates rearward (downstream of the mainstream).

A gas turbine engine (gas turbine) of the embodiment is used, for example, in an aircraft and a power generator. As shown in Fig. 1, the gas turbine engine (gas turbine) 1 of the embodiment includes a compressor 3. The compressor 3 compresses air A which is taken into the gas turbine engine 1, and thus produces compressed air PA. In addition, a turbine 5 is connected to the compressor 3 by use of a turbine shaft (rotary shaft) 7. The turbine 5 is driven by a combustion gas G which expands in the turbine 5, and concurrently drives the compressor 3 by use of the turbine shaft 7. Furthermore, a combustor 9 is provided between the compressor 3 and the turbine 5. The combustor 9 combusts fuel F in the compressed air PA which is sent from the compressor 3, produces the combustion gas G, and discharges the combustion gas G towards the turbine 5.

The overall configuration of the combustor 9 will be described as follows.

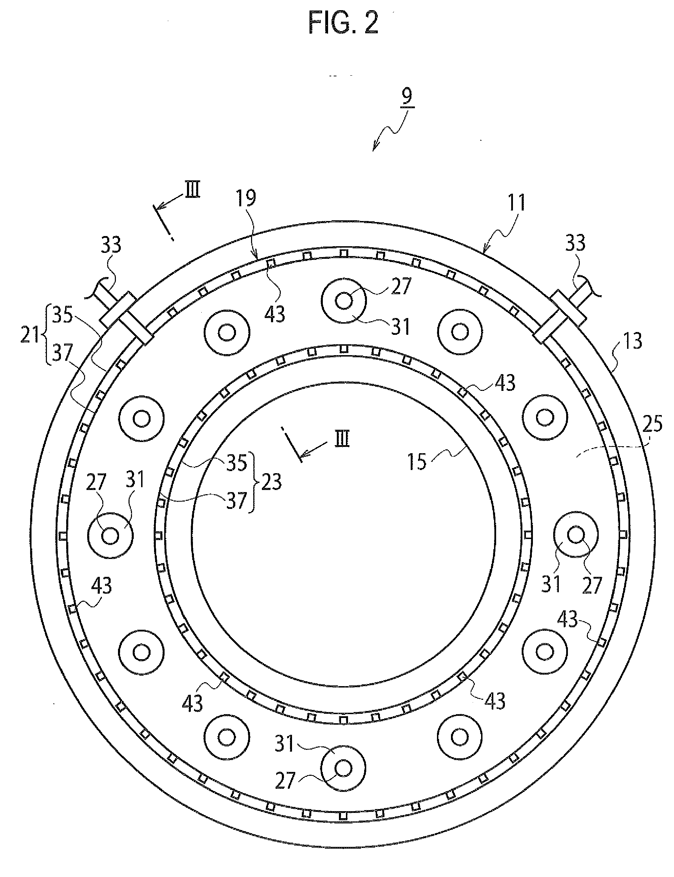

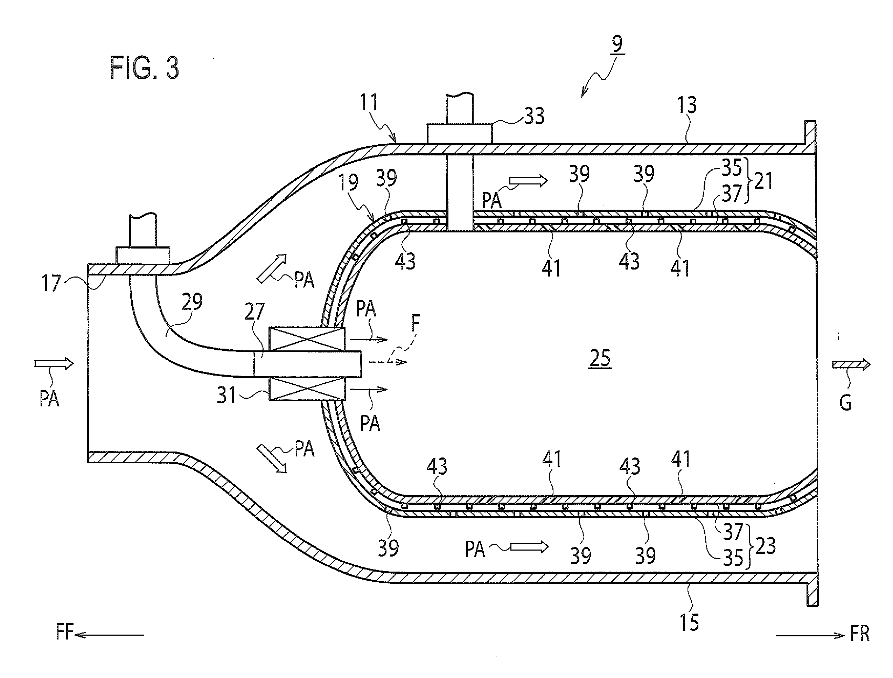

As shown in Fig. 2 and Fig. 3, the combustor 9 is, for example, an annular combustor. In this case, the combustor 9 includes an annular (hollow annular) combustor case 11. In addition, the combustor case 11 includes: an annular outer case 13; and an annular inner case 15 provided inside the outer case 13. Furthermore, an annular introduction port 17 configured to introduce the compressed air PA from the compressor 3 into the combustor case 11 is provided in the front section of the combustor case 11.

An annular (hollow annular) combustor liner 19 is installed in the combustor case 11. The combustor liner 19 includes: an annular outer liner 21; and an annular inner liner 23 installed inside the outer liner 21. In addition, an annular combustion chamber 25 configured to combust the fuel F is formed in the combustor liner 19. In other words, the annular combustion chamber 25 is formed between the outer liner 21 and the inner liner 23. It should be noted that the outer case 13, the inner case 15, the outer liner 21, and the inner liner 23 are set concentrically.

Multiple fuel nozzles 27 configured to inject the fuel F into the combustion chamber 25 are installed in the front section of the combustor liner 19 at intervals in the circumferential direction. A fuel pipe 29 configured to supply the fuel F is connected to each fuel nozzle 27. Each fuel pipe 29 juts out from the combustor case 11. In addition, a swirler 31 is installed around the peripheral edge of each fuel nozzle 27 in the front section of the combustor liner 19. The swirler 31 guides the compressed air PA into combustion chamber 25 with adding swirl to the flow. Furthermore, multiple ignition plugs 33 configured to light off (ignite) the fuel F are installed to the combustor case 11. The tip end portion of each ignition plug 33 projects inside the combustor case 11 (inside the combustion chamber 25).

The configuration of characteristic portions of the combustor 9 will be described as follows.

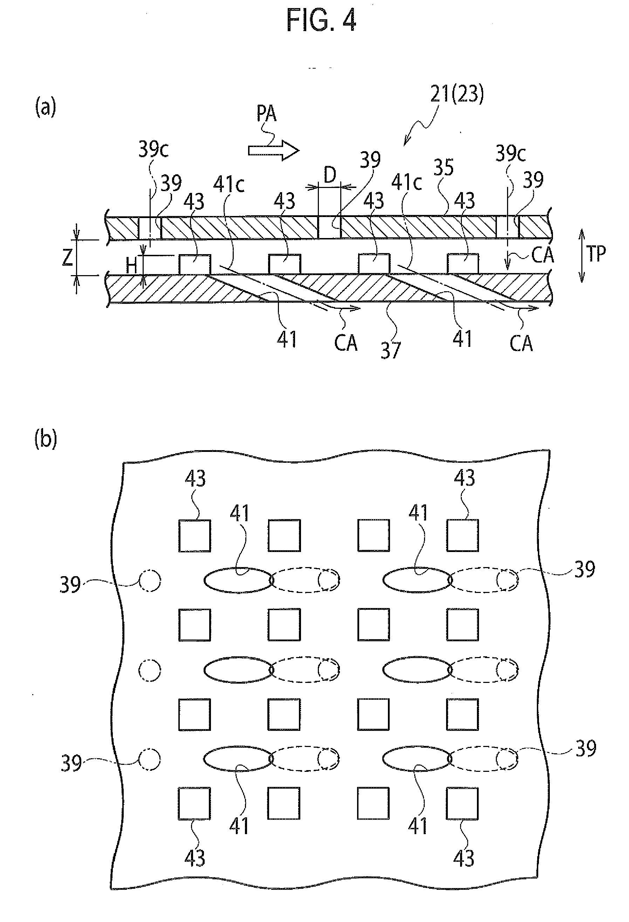

As shown in Fig. 3 and Fig. 4(a), the outer liner 21 and the inner liner 23 each have a double-wall structure which includes an external wall 35 of the liner and an internal wall 37 of the liner. Multiple impingement-cooling holes 39 are opened passing through the external wall 35 of the liner for part of the compressed air PA to blow out towards an outer surface (outer wall surface) of the internal wall 37 of the liner as cooling air CA. The center line 39c of each impingement-cooling hole 39 is in parallel to the thickness direction TP of the external wall 35 of the liner.

Multiple effusion cooling holes 41 are opened passing through the internal wall 37 of the liner for the cooling air CA to blow out along the inner surface (inner wall surface) of the internal wall 37 of the liner. The center line (center axis) 41c of each effusion cooling hole 41 tilts from the thickness direction TP of the internal wall 37 of the liner such that an outlet portion of the effusion cooling hole 41 is located downstream of an inlet portion of the effusion cooling hole 41. Here, the diameter of the cross section of each effusion cooling hole 41 which is perpendicular to the center line 41c (or the equivalent diameter of the effusion cooling hole 41), and the diameter of the cross section of each impingement-cooling hole 39 which is perpendicular to the center line (center axis) 39c (or the equivalent diameter of the impingement-cooling hole 39) are each set arbitrarily depending on the design. It should be noted that the equivalent diameter of a hole means: the diameter of the cross section of the hole when the cross section of the hole perpendicular to the center line is a circle; or the hydraulic diameter (4 × area of cross section / peripheral length) when the cross section thereof is not a circle.

A ratio (Z/D) of a clearance Z between the inner surface of the external wall 35 of the liner and the outer surface of the internal wall 37 of the liner to the equivalent diameter D of each impingement-cooling hole 39 is set in a range of 1.0 to 5.0 so that the impingement cooling performance can be fully exerted.

Multiple pin-flns (heat transfer enhancement pin-fins) 43 are formed on the outer surface of the internal wall 37 of the liner. A top surface of each pin-fin 43 is not in contact with the inner surface of the external wall 35 of the liner. In addition, a ratio (H/D) of a height H of each pin-fin 43 to the equivalent diameter D of each impingement-cooling hole is set in a range of 1.0 to 3.0. The reason why the ratio (H/D) is set at 1.0 or greater is that the heat transfer enhancement effect by the pin-fin 43 is not sufficiently exerted if the ratio (H/D) is set below 1.0. The reason why the ratio (H/D) is set less than 3.0 is that, even if the ratio (H/D) is set greater than 3.0, no improvement in the heat transfer by the pin-fin 43 is expected and the weight of the combustor liner 19 is increased. It should be noted that the cross-sectional shape of each pin-fin 43 is not limited to a square as shown in Fig. 4, and may be set in any arbitrary shape.

As shown in Fig. 4 (b), the outlet portion (the opening on the outlet side) of each impingement-cooling hole 39, the inlet portion (the opening on the inlet side) of each effusion cooling hole 41, and each pin-fin 43 are placed respectively in different locations in a state where the combustor liner 19 is developed into a plane.

Descriptions will be provided for the work and effect of the embodiment of the present invention on the basis of the above-described configuration.

The compressed air PA sent from the compressor 3 is introduced into the combustor case 11 through the introduction port 17, and is subsequently swirled by the swirler 31 then guided into the combustion chamber 25. In the meantime, the fuel F is injected from the multiple fuel nozzles 27 into the combustion chamber 25, and the fuel F is ignited by the ignition plugs 33. Thereby, the fuel F is combusted in the compressed air PA inside the combustion chamber 25, and the combustion gas G is produced. The combustion gas G is discharged to the turbine 5, and the operation of the gas turbine engine 1 is thus continued.

During the operation of the gas turbine engine 1, the compressed air PA flows into an interstice between the inner surface of the combustor case 11 and the outer surface of the combustor liner 19. This compressed air PA is caused to blow out towards the outer surface of the internal wall 37 of the liner through the multiple impingement-cooling holes 39. The cooling air CA thus blowing out impinges on the outer surface of the internal wall 37 of the liner, and performs impingement cooling on the internal wall 37 of the liner. Furthermore, the cooling air CA having contributed to the impingement cooling is caused to blow out along the inner surface of the internal wall 37 of the liner through the multiple effusion cooling holes 41. Thus, the cooling air CA flows along the inner surface of the internal wall 37 of the liner, and performs effusion cooling on the internal wall 37 of the liner. Moreover, since the top surface of each pin-fin 43 is not in contact with the inner surface of the external wall 35 of the liner and the ratio (H/D) of the height H of each pin-fin 43 to the equivalent diameter D of each impingement-cooling hole 39 is set in the range of 1.0 to 3.0, the application of the above-mentioned new finding makes it possible to sufficiently enhance the cooling effectiveness of the combustor liner 19 while inhibiting an increase in weight of the combustor liner 19 and inhibiting a rise in temperature of the combustor liner 19 (particularly a rise in temperature of the internal wall 37 of the liner).

Accordingly, the embodiment makes it possible to set an optimum structure in light of the weight and cooling performance of the combustor 9 for a gas turbine engine.

It should be noted that the present invention is not limited to the above descriptions of the embodiment and that the present invention can be carried out in various other modes, inclusive of a mode to apply the technical idea employed in the gas turbine engine 1 to a power generation gas turbine engine (not illustrated). Furthermore, the scope of the rights to be encompassed by the present invention is not limited to these embodiments.

### [Example]

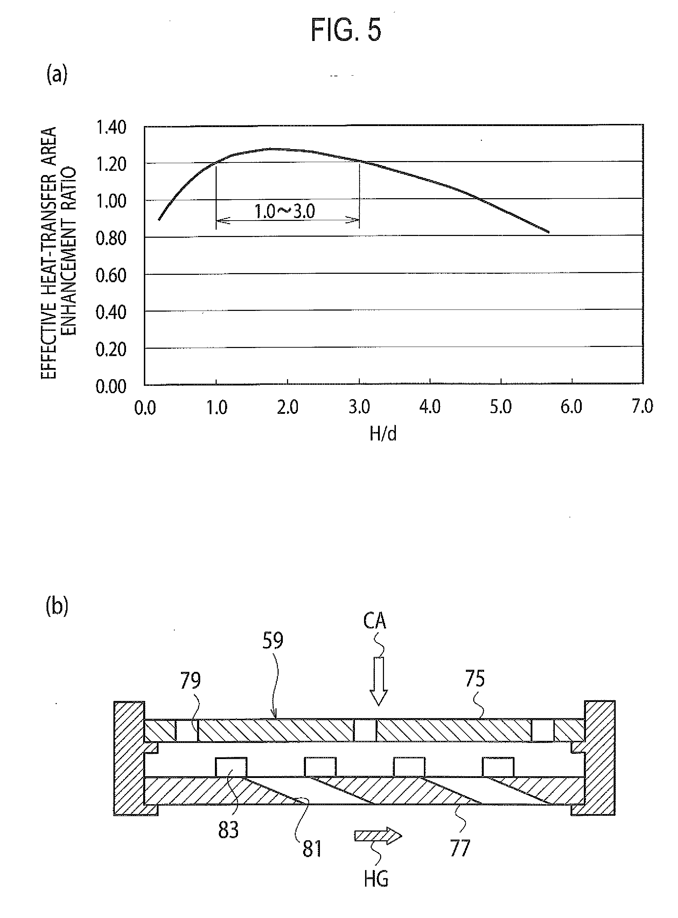

Descriptions will be provided for an example of the present invention by referring to Figs. 5(a) and 5(b).

The cooling effectiveness of the combustor liner can be evaluated by an effective heat transfer area enhancement ratio. The effective heat transfer area enhancement ratio means a ratio of a product of a heat transfer area on a cooling side without the pin-fins and an average heat transfer coefficient to a product of a heat transfer area on the cooling side with the pin-fins and the average heat transfer coefficient. A higher effective heat transfer area enhancement ratio leads to higher cooling effectiveness.

Fig. 5(a) shows a relationship between the ratio (H/D) and the effective heat transfer area enhancement ratio. Here, reference sign H denotes the height of the above-described pin-fins and reference sign D denotes the equivalent diameter of the above-described impingement-cooling holes. The relationship shown in Fig. 5 (a) was obtained by correcting an analytical result obtained by a CFD (Computational Fluid Dynamics) analysis with a result of a cooling performance test. In this cooling performance test, a test piece 59 (see Fig. 5(b)) made to simulate the combustor liner 19 was used, and a surface temperature on an internal wall 77 side of the liner of the test piece 59 was measured in the case where a high-temperature gas HG was flowing on the internal wall 77 side of the liner and the cooling air CA was flowing on an external wall 75 side of the liner of the test piece 59. Here, multiple impingement-cooling holes 79 were opened in the external wall 75 of the liner and multiple effusion cooling holes 81 were opened in the internal wall 77 of the liner. In addition, multiple pin-fins 83 were formed on the external surface of the internal wall 77 of the liner. The top surface of each pin-fin 83 was not in contact with the inner surface of the external wall 75 of the liner. In other words, the impingement-cooling holes 79, the effusion cooling holes 81, and the pin-fins 83 in Fig. 5(b) correspond to the impingement-cooling holes 39, the effusion cooling holes 41, and the heat transfer pins 43 in Fig. 4(a), respectively.

It was found from the result of the above-mentioned CFD analysis and the like that the effective heat transfer area enhancement ratio increased when the ratio (H/D) of the height H of the pin-fins to the equivalent diameter D of the impingement-cooling holes was in the range of 1.0 to 3.0.

In other words, it was found that the cooling performance of the combustor liner was sufficiently enhanced by setting the ratio (H/D) of the height H of the pin-fins to the equivalent diameter D of the impingement-cooling holes equal to 1.0 or above while making the top surface of each pin-fin not in contact with the inner surface of the external wall of the liner. Furthermore, it was found that the cooling performance of the combustor liner was not enhanced any more when the ratio (H/D) of the height H of each pin-fin to the equivalent diameter D of the impingement cooling-hole exceeded 3.0.

### [Industrial Applicability]

It is possible to establish an optimum structure for the weight and cooling performance of the combustor 9 for a gas turbine engine.

## Claims

1. A combustor for a gas turbine engine used in the gas turbine engine and configured to produce a combustion gas by combusting fuel in compressed air, the combustor comprising:
a combustor case; and
a combustor liner installed inside the combustor case and including a combustion chamber which is formed inside the combustor liner, the combustion chamber configured to combust the fuel, wherein
the combustor liner is formed into a double-wall structure including an external wall of the liner and an internal wall of the liner,
a plurality of impingement-cooling holes are opened passing through the external wall of the liner for part of the compressed air as cooling air to blow out towards an outer surface of the internal wall of the liner,
a plurality of effusion cooling holes are opened passing through the internal wall of the liner for the cooling air to blow out along an inner surface of the internal wall of the liner,
a plurality of pin-fins are formed on the outer surface of the internal wall of the liner,
a top surface of each pin-fin is not in contact with an inner surface of the external wall of the liner, and
a ratio of a height of each pin-fin to an equivalent diameter of each impingement-cooling hole is set in a range of 1.0 to 3.0.

2. The combustor for a gas turbine engine of claim 1, wherein a ratio of a clearance between the inner surface of the external wall of the liner and the outer surface of the internal wall of the liner to the equivalent diameter of the impingement-cooling hole is set in a range of 1.0 to 5.0.

3. The combustor for a gas turbine engine of claim 1 or 2, wherein an outlet portion of each impingement-cooling hole, an inlet portion of each effusion cooling hole, and each pin-fin are placed in mutually different locations in a state where the combustor liner is developed into a plane.

4. A gas turbine comprising the combustor for a gas turbine engine of any one of claims 1 to 3.
